# EUROPEAN PATENT SPECIFICATION

(11) **EP 3 195 653 B1**
(45) Date of publication and mention of the grant of the patent: **21.07.2021**
(21) Application number: 15785056.1
(22) Date of filing: 18.09.2015
(51) Int. Cl.: H04W 36/00, H04W 36/24, H04W 36/38, H04W 36/08, H04W 36/18

(54) **FLOATING LINK HANDOVER USING VIRTUAL ACCESS POINT IDENTIFICATION**
ÜBERGABE EINER SCHWEBENDEN VERBINDUNG MITTELS VIRTUELLER ZUGANGSPUNKTIDENTIFIZIERUNG
TRANSFERT DE LIAISONS FLOTTANTES AU MOYEN D'UNE IDENTIFICATION DE POINT D'ACCÈS VIRTUEL

(30) Priority: 18.09.2014 US 201462052105 P; 23.01.2015 GB 201501142
(43) Date of publication of application: 26.07.2017
(60) Divisional application: 21178641.3
(73) Proprietor: Airties Kablosuz Iletisim San. ve Dis Tic. A.S., Istanbul (TR)
(72) Inventor: SOYAK, Eren, Istanbul PK 34394 (TR); BIRLIK, Firat, PK 34394 Istanbul (TR); PALAZ, Okan, PK 34394 Istanbul (TR)
(74) Representative: Nicholls, David Peter
(86) International application number: PCT/EP2015/071515
(87) International publication number: WO 2016/042157

(56) References cited:
- EP-A1- 2 265 056
- US-A1- 2002 167 965
- US-A1- 2009 141 685
- US-A1- 2010 046 417
- US-A1- 2013 089 092

## Description

### Field of the invention

The present invention relates to a device and method for communicating in a wireless network. Particularly, but not exclusively, the present invention relates to a device and method for communicating in a hybrid wireless mesh network.

### Background summary

The use of wireless devices in commercial and residential environments is rapidly increasing and, accordingly, there is increased consumer expectation that communication using such wireless devices is of high, un-interrupted, quality. Due to the wireless nature of the devices, which are commonly portable, such communication is ideally seamless as the wireless devices are moved within a particular environment, such as residential building or an office. For example, in a residential dwelling, a tablet device might be moved from a room close to an access point on the ground floor, to a room upstairs in the residential dwelling, remote from the access point to a wireless network. In order to maintain connectivity, it is known to create wireless networks, which use access points to create a pathway between the wireless devices and a gateway that is connected, for example, to the internet.

Wireless networks contain a plurality of nodes that are interconnected to form a mesh network. The nodes in a wireless network may be wireless network devices such as tablets, smartphones and laptops, which are often portable client devices that are usefully movable within wireless networks. Mesh network nodes may also be wireless network devices, such as access points, which allow for the extension of connectivity of wireless networks, meaning that client devices can link directly to different access points. Known art includes US 2009/141685 A1 (which describes a mobile station handover using transferrable virtual access point address for wireless networks), US 2013/089092 A1 (which describes a method for preventing address conflict, and an access node) and US 2010/046417 A1 (which describes a wireless LAN relay apparatus).

A problem that arises from the use of a wireless network system is that when a wireless network client device associates with a particular access point, and then is subsequently moved within the network environment, the signal strength between the client device and associated access point may decrease, thereby affecting connectivity and data transmission.

Such a decrease in signal strength may be particularly noticeable in systems employing relatively short range communication techniques, such as WiFi (RTM) or Bluetooth (RTM).

Additionally, a single poor link may result in overall decreased capacity of the network. It is known to address the problem of a client device remaining linked to a particular access point by turning off the wireless connection and then turning it back on in the new location. This commonly results in the client device scanning and selecting the most appropriate access point with which it should connect, based on its location. Alternatively, manual selection of the appropriate link may be made from a list of available options using the client device. This operation may also be performed automatically, for example the client device may be configured to roam for, and connect to, the best immediate connection, for example the access point with which it most strongly associates, and therefore with which it has the highest immediate data rate connection. However, the act of roaming to switch between different access points causes interruptions to the connectivity. Further, the highest immediate data rate connection may be a strong link in an otherwise weak chain and therefore by connecting with the most immediately strong link does not guarantee that overall end-to-end connectivity is improved between end points of data transfer.

A consequence of known techniques is that the quality of the data transmission in a wireless network is not always as high as is expected since the user of the device may not perform the manual operation when needed or may select a less than optimal pathway.

The invention is defined by independent claims 1, 4, 8, 10 and 14.

In order to mitigate for at least some of the above-described problems, there is provided a wireless network device configurable for communication with a client device and a further network device, the wireless network device comprising: a processor; a network interface; and a virtual address stored in a memory, wherein the processor is configured to determine whether to operate the wireless network device, in use, in a first state or a second state, wherein: in the first state the wireless network device communicates with the client device using the virtual address to identify itself to the client device; and in the second state the wireless network device sends a command containing information associated with the virtual address to the further network device via the network interface, wherein the command instructs the further network device to assume the virtual address and communicate with the client device instead of the wireless network device after a predetermined time interval.

Further, there is provided a wireless network device configurable for communication with a client device and another network device, the wireless network device comprising: a processor; a network interface; and a memory, wherein the processor is configured to: receive a command from the other network device through the network interface, wherein the command instructs the wireless network device to assume a virtual address of the further network device and communicate with the client device instead of the other network device after a predetermined time interval; store the virtual address in the memory; and communicate with the client device using the virtual address to identify itself to the client device after the predetermined time interval.

Further, there is provided a method of communicating in a network, the method comprising the steps of: determining at a processor of a wireless network device configurable for communication with a client device and a further network device, whether to operate the wireless network device, in a first state or a second state, wherein: in the first state the wireless network device communicates with the client device using a virtual address stored in the memory of the network device to identify itself to the client device; and in the second state the wireless network device sends a command containing information associated with the virtual address stored in the memory of the network device to the further network device via a network interface, wherein the command instructs the further network device to assume the virtual address and communicate with the client device instead of the wireless network device after a predetermined time interval; and operating in the first state or the second state.

Further, there is provided a method of communicating in a network, the method comprising the steps of: receiving at a processor of a wireless network device, configurable for communication with a client device and another network device, a command from the other network device, wherein the command instructs the wireless network device to assume a virtual address of the other network device and communicate with the client device instead of the other network device after a predetermined time interval; storing the virtual address in a memory of the network device; and communicating via a network interface of the network device with the client device using the virtual address to identify the network device to the client device after the predetermined time interval.

Further, there is provided a network device configurable for communication with a wireless network device and a client device, the network device comprising: a processor; a network interface; and at least one virtual address stored in a memory, wherein the processor is configured to determine whether to operate the wireless network device, in a first state or a second state, wherein: in the first state the wireless network device communicates with the client device using the at least one virtual address to identify itself to the client device; and in the second state the wireless network device sends a command containing information associated with the at least one virtual address to another wireless network device, via the network interface, wherein the command instructs the other wireless network device to assume the at least one virtual address and communicate with the client device instead of the wireless network device after a predetermined time interval.

### Brief description of the drawings

Embodiments of the present invention will now be described, by way of example only, with reference to the following drawings, in which;
Figure 1 is a schematic of linkable devices in a wireless network, in accordance with an embodiment of the invention;
Figure 2 is a schematic of linkable devices in a wireless network, in accordance with an embodiment of the invention;
Figure 3 is a flowchart of a method, in accordance with an embodiment of the invention;
Figure 4 is schematic of home network, in accordance with an embodiment of the invention; and
Figure 5 is schematic of linkable devices in a wireless network, in accordance with an embodiment of the invention.

### Detailed description of an embodiment

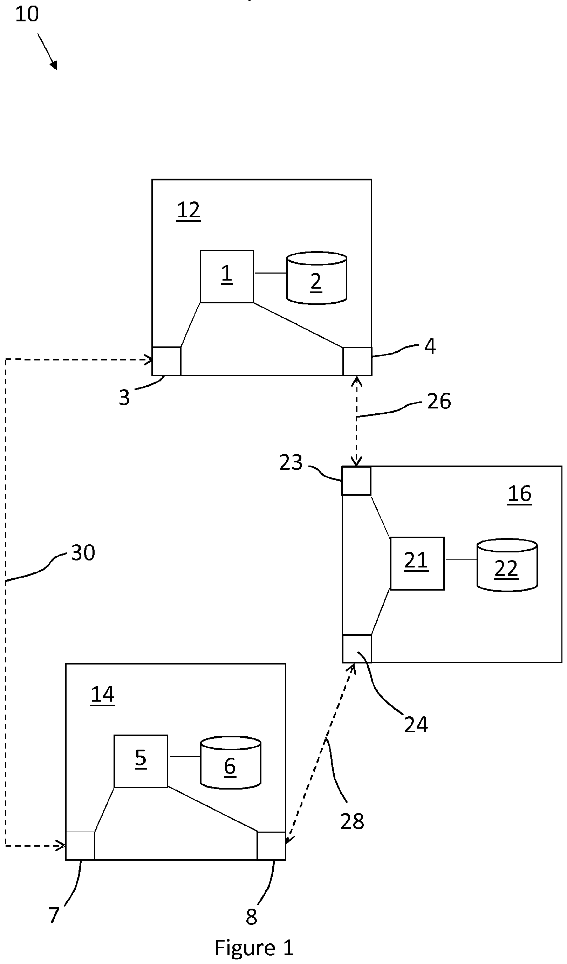

Figure 1 is a schematic of linked devices in a wireless network 10. There is shown a first access point 12, a second access point 14 and a client device 16, which are all configurable to communicate with one another. The first access point 12, the second access point 14 and the client device 16 are all wireless network devices. The first access point 12 is shown to have a processor 1 and a memory 2, as well as network interfaces 3, 4. The second access point 14 also has a processor 5, a memory 6 and network interfaces 7, 8. The client device 16 has a memory 22 and a processor 21 and network interfaces 23, 24.

In use, initially, the first access point 12 is in active communication with the client device 16. The first access point 12 and the client device 16 exchange data via the network interfaces 4, 23. The link between the first access point 12 and the client device 16 is known as a floating link (FL) 26. The floating link 26 works based on mutual identification of the client device 16 to the access point 12 and of the access point 12 to the client device 16. The mutual identification is based on Media Access Control (MAC) addresses and each packet that is transmitted along the floating link 26 includes the source and destination MAC addresses in its header.

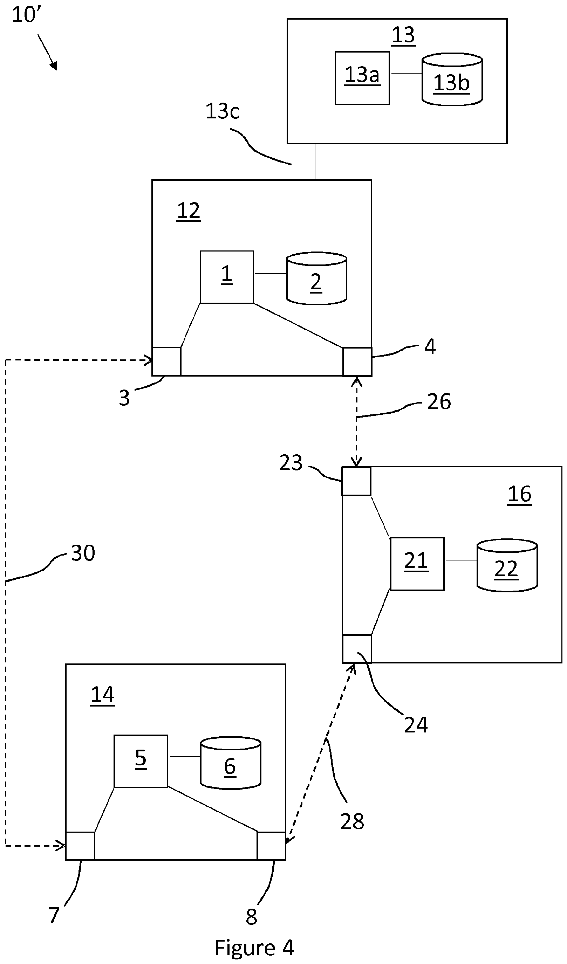

The first access point 12 has a virtual Media Access Control (vMAC) address instead of a conventional fixed MAC address. There is a vMAC address for each client device 16 that interacts with the access point 12. The vMAC addresses are unique to the local area network (LAN) in which the client device 16 and the access point 12 are operating, but are not permanently linked to the access point 12 that has issued them. A vMAC address is assigned by the first access point 12 to identify itself to a client device 16 upon first interaction. The vMAC address is sourced either from the memory 2, or from a centralised database (described in relation to Figure 4 below). In an example, a vMAC address is generated based on a hash of a device's real MAC address. In further examples, a vMAC address is based on any system that provides a usable address that is unique within the network.

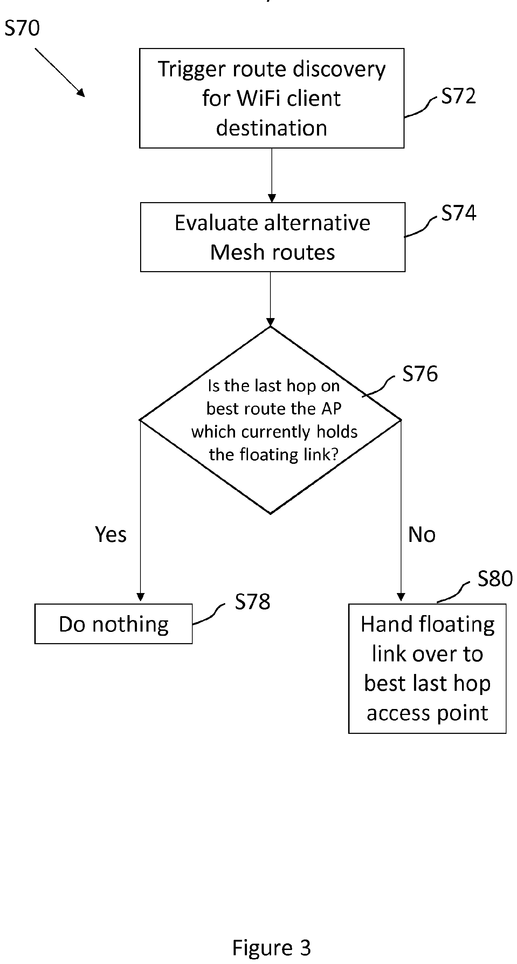

The first access point 12 monitors potentially superior pathways between other network devices and the client device 16 at its processor 1. In the event that a superior pathway is identified, the first access point 12 performs a handoff operation. In the handoff operation, the vMAC address that is used to identify the first access point 12 to the client device 16 is passed to the superior access point via network interfaces 3, 7. This is illustrated at Figure 1, where the second access point 14 has a superior potential link with client device 16. The vMAC address of the first access point 12 is passed in a command 30 to the second access point 14. The command 30 instructs the second access point 14 to store the vMAC address in its memory 6 and to use it to identify itself to the client device 16. The determination of superior pathways is detailed below with reference to Figure 3.

Once the second access point 14 has received a command 30 to instruct it to communicate with the client device 16, it forms a floating link 28 between a network interface 8 of the second access point 14 and a network interface 24 of the client device 16.

Figure 1 depicts two network interfaces 3, 4 at the first access point 12, two network interfaces 7, 8 at the second access point 14 and two network interfaces 23, 24 at the client device 16, however, in other examples, the first access point 12, the second access point 14 and the client device 16 have one or more network interfaces. Different network interfaces allow the access points and client devices to operate using different communication methods, such as WiFi (RTM), Bluetooth (RTM), WiGig (RTM), ZigBee (RTM) and LiFi (RTM). Different communication methods can be used to communicate between access points and client devices, for example, with reference to Figure 1, the first access point 12 can communicate with the client device 16 using WiFi and a vMAC address, however the command 30 could be sent from the first access point 12 to the second access point 14 using a different communication method, such as a wired method, for example using an ethernet connection, or a different wireless method, for example, Bluetooth (RTM).

The use of a vMAC address that can be passed from the first access point 12 to the second access point 14 advantageously means that the access point with which the client device 16 is communicating changes in a favourable way so that the overall communication path is optimised, however, the client device 16 is unaware that the change has been made and therefore, beneficially, seamless use of the client device 16 over optimised channels is achieved without having to reboot the client device 16's wireless connection.

When it is determined at the processor 1 of the first access point 12 that there is a superior pathway that is routed through the second access point 14, a handoff operation is performed. The handoff operation is performed in a single step. The first access point 12 sends a command packet 30 to the second access point 14. The command packet 30 contains the vMAC address that the first access point 12 was using to identify itself to the client device 16 and instructions telling the second access point 14 to use the vMAC address to create a floating link 28 between the client device 16 and the second access point 14. Upon receipt of the command packet 30 from the first access point 12, the second access point 14 transmits data throughout the network, informing other network devices that it has assumed the vMAC address and is using it to communicate with the client device 16. The data may be transmitted by being broadcast, or by unicasts directed to specific access points or network nodes. The second access point 14 uses the vMAC to communicate with the client device 16 whilst also monitoring for potentially superior routes of communication for the client device 16. In the event that a superior communication route is found with a different device, the vMAC is passed to that device, along with a command instructing the different device to use the vMAC to identify itself and communicate with the client device 16.

Preferably a vMAC address is used for the wireless network devices 12, 14, 16 to identify one another in order to enable communication. In further examples, different types of virtual address may be used for the devices to identify one another. For example, virtual Bluetooth address (vBD_ADDR) are used in the same manner as a vMAC address. Similarly, in further examples similar mechanisms of virtual addresses are used in the context of IEEE 802.15 (ZigBee), IEEE 802.11ad (WiGig) and Visible Light Communication (LiFi).

The command 30 from the first access point 12 to the second access point 14 contains the vMAC address so that the second access point 14 can seamlessly pick up communication with the client device 16. In further examples, the command 30 also contains context information regarding the vMAC, such as the WPA2 encryption cypher and last known PHY link adaptation state.

For a client device to enter a mesh network using floating links and virtual address, the client device must initially associate with a node, such as an access point. The node with which it associates may be the first physical network node with which it attempts to associate. For example, for a WiFi device this would be the first access point to which an Associate Request is sent. This node generates the virtual address for the floating link and the node becomes the first Holder of the floating link. In an example, each access point in the floating link network has a list of virtual addresses (for every available physical layer such as WiFi or Bluetooth) that it can generate, while in another embodiment these addresses are drawn out of a central list. With reference to Figure 1, when the client device 16 enters the network 10, an Associate Request is sent to the first access point 12. The first access point 12 generates, either from memory 2, or from a centralised database (described below with reference to Figure 4), a virtual address. The virtual address is used to identify the first access point 12 to the client device 16, thereby allowing enabling communication over link 26.

Once a client device disconnects from the network (which could be through an explicit control packet stating disassociation, or through a prolonged period of idleness or non-responsiveness), the current Holder for that floating link advertises this event throughout the network. When a network node hears such a disconnect advertisement, it will check the floating link address against the list of virtual floating link addresses it has issued in the past, and, if the disconnected floating link is among them, free the entry for re-issuing. For example, with reference to Figure 1, when the client device 16 exits the network 10, the first access point 12 advertises this event to other nodes in the network, for example the second access point 14. In the event that the client device 16 re-enters the network, the virtual address that was used to connect the first access point 12 and the client device 16 is available for the second access point 14 to identify itself to the client device 16, if the re-entry dictates that forming that link 28 is preferable.

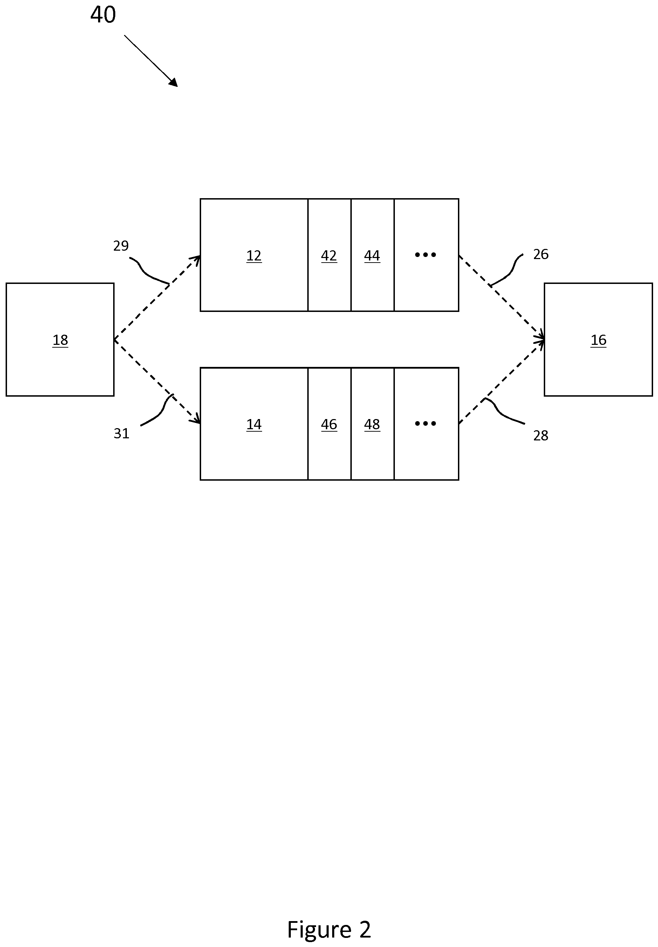

The handoff operation is performed in a single step. In further examples, the handoff operation is a phased procedure. The phased procedure advantageously deals with packets that are queued at an access point whilst the access point makes a decision to pass the virtual address to a different access point. Figure 2 is a schematic of an arrangement 40 showing the first access point 12, the second access point 14, the client device 16 and a third access point 18. There are shown data packets 42, 44 queued at the first access point 12 and data packets 46, 48 queued at the second access point 14. In use, in an exemplary mesh network, data is initially routed from the third access point 18 to the client device 16 via the first access point 12. In the example shown in Figure 2, data packets 42, 44 are sent from the third access point via link 29 to the first access point 12, where they are queued for further sending to the client device 16. The first access point 12 establishes a floating link 26 with the client device 16 and identifies itself using a vMAC address. When it is determined that communication from the third access point 18 to the client device 16 is superior when directed through the second access point 14, the handoff from the first access point 12 to the second access point 14 is performed. In a two phase handoff, the first access point 12 performs a first phase where the first access point 12 maintains the floating link 26 but sends a command 30 to the second access point 14 indicating that the handoff has been initiated. The first access point 12 continues to transmit queued data packets 42, 44, to the client device 16 using the floating link 26 based on the virtual address. Once the queue of data packets 42, 44 has been depleted and there are no more data packets to be sent from the first access point 12 to the client device 16, the second phase of the two phase handoff procedure commences and the second access point 14 starts to use the vMAC address to communicate with the client device over a floating link 28 using the vMAC address.

Once the second access point 14 is using the vMAC to communicate with the client device 16 over the floating link 28, it transmits data to other devices in the network, informing them that it is using the vMAC to communicate with the client device 16. At that point, the third access point 18 starts to send data packets 46, 48, to the client device 16 via the communication path 31 and the floating link 28. In the period of time between the second access point 14 announcing to the network that it is communicating with the client device 16 and the queue of data packets 42, 44 being depleted from the first access point 12, data packets directed to the first access point 12 are either dropped or routed to the client device 16 via a different route. Depending on the data that is being routed through the system, the possibility of lost packets that are queued may not be significantly detrimental to the overall quality of the data consumed at a client device.

In a further example, the handoff operation is a three-phased operation. In use, data is initially routed from the third access point 18 to the client device 16 via the first access point 12. Using the example shown in Figure 2, data packets 42, 44 are sent from the third access point via link 29 to the first access point 12, where they are queued for further sending to the client device 16. The first access point 12 establishes a floating link 26 with the client device 16 and identifies itself using a vMAC address. When it is determined that communication from the third access point 18 to the client device 16 is superior when directed through the second access point 14, the handoff from the first access point 12 to the second access point 14 is performed. In a three phase handoff, the first access point 12 performs a first phase where the first access point 12 maintains the floating link 26 but sends a command 30 to the second access point 14 indicating that the handoff has been initiated. The first access point 12 continues to transmit queued data packets 42, 44, to the client device 16 using the floating link 26 based on the virtual address. Meanwhile, the second access point 14 transmits data to other devices in the network, informing them that it is using the vMAC to communicate with the client device 16. At that point, the third access point 18 starts to send data packets 46, 48, to the client device 16 via the communication path 31 and the floating link 28. Once the second access point 14 has transmitted data to other devices in the network, informing them that it is using the vMAC to communicate with the client device 16, the second phase of the three-phase handoff commences and the second client device 14 sends a notification to the first access point 12, telling the first access point 12 that it has now notified the network of the change in present ownership of the vMAC address.

Once the queue of data packets 42, 44 has been depleted from the first access point 12 to the client device 16 and there are no more data packets to be sent from the first access point 12 to the client device 16, the third phase of the three-phase handoff commences and the first access point 12 sends a notification to the second access point 14, telling it that the queue of data packets 42, 44 has been depleted. The second access point 14 then starts to transmit data packets 46, 48, which it has received and queued from the third access point 18, via floating link 28 to the client device 16. Advantageously, excess data packets are not lost by being sent to the first access point 12 once the second access point 14 has assumed the vMAC address and formed a floating link 28 with the client device 16.

In the period of time between the second access point 14 announcing to the network that it is communicating with the client device 16 and the queue of data packets 42, 44 being depleted from the first access point 12, data packets directed to the first access point 12 are either dropped or routed to the client device 16 via a different route.

The determination of whether there is a superior pathway through which data should be routed is now described with reference to Figure 3.

At an access point, such as the first access point 12, or second access point 14, of Figure 1, a process S70 for determining the best communication pathway is initiated. At step S72, the access point starts route discovery for the WiFi client destination, such as for the client device 16 of Figure 1.

Route discovery is described in UK Patent Application. No.1422183.2, titled: Systems and Methods for Selecting an Optimum Communication Route in a Wireless Network. In an example with reference to Figure 1, the first access point 12 is initially in communication with the client device 16, identifying itself to the client device 16 using a virtual address. The first access point 12 uses a request/response mechanism to determine traffic through different pathways in a mesh network. A request, such as a Beacon Request Frame, is sent by the first access point 12 to the client device 16 and to other nodes in the network, for example, the second access point 14 of Figure 1. The second access point 14 also transmits requests to other nodes in the network. Each node in the network collects request frames and prepares and sends responses (such as Beacon Response Frames) to each of the request frames, containing information about the received request packets and corresponding data. This way, data, such as Received Signal Strength Indication (RSSI) values between different nodes are disseminated throughout the network, enabling determination of data throughputs in the network.
Once the first access point 12 has received information from the route discovery process, the process moves to step S74, whereby potential mesh routes in a mesh network are evaluated at the processor 1. The end-to-end throughput through alternative mesh routes in the network is evaluated. For example, with reference to Figure 1, the first access point 12 determines traffic throughput to and from the client device 16 via each of the first access point 12 and the second access point 14.

The process then moves to step S76, where it is asked if the last hop formed by a floating link from the current access point is the best route that can be established. If it is (for example, if the connection between the first access point 12 and the client device 16 enables better data transfer than between the client device 16 and the second access point 14), then the process moves to step S78 and no action is taken. If it is not (for example, if the connection between the first access point 12 and the client device 16 enables less data transfer than between the client device 16 and the second access point 14), the process moves to step S80 and a handoff operation is performed to transfer information relating to the virtual address upon which the current floating link is based to the access point that does form the best last hop, i.e. the second access point 14 in this example. The process S70 is initiated periodically. However, in further examples, the process S70 is initiated by receipt at an access point of a packet with a MAC address that is not registered in a forwarding table of MAC addresses that is stored in the memory of the access point.

In a further example, the handoff operation at step S80 is performed in order to provide a station, such as a client device, with the strongest link to an access point in the network. One way this can be done is by determining at step S76 that the best route on the last hop is determined by the Received Signal Strength Indication (RSSI) at the other access points in the network. This is done by having each access point periodically broadcast a control packet to other associated mesh access points with a list of client devices it can hear and their RSSIs. This RSSI estimation can be done by an AP to which the client is not currently associated by observing the RSSI of broadcast packets, such as Probe Requests or Clear-To-Send (CTS) messages. This distinction is important to offset the possibly misleading effects of access point-client specific measures, such as beamforming. The RSSI is used to estimate potential link capacity between the estimating AP and client. While raw RSSI can be used directly to estimate this capacity, other factors, such as channel width (20/40/80/160 MHz), noise level, number of available transmit and receive chains etc. can be used to form a more accurate estimate of potential link capacity.

When an access point learns from another access point that one of its current client devices can establish a better link with that access point, it will perform a floating link FL handoff to that access point.

In another embodiment, the access points attempt to maintain the best end-to-end link for the client device. At step S76, the best end-to-end link is determined as the link which minimizes the airtime spent by the client for its uplink and downlink traffic, including airtime spent by the network, such as a Hybrid Mesh network, in getting the traffic to the access point which holds the floating link for the client device. In this embodiment the access points still broadcast client device RSSI information as described above, but instead of choosing the best link based on RSSI, the decision to move to step S80 is based on the access point holding the floating link chooses to handoff if the current traffic pattern of the client device (all uplink and downlink activity to all traffic sources and sinks) would be minimized by handing the floating link off to another access point.

In another embodiment, each access point is free to "commandeer" the floating link to the client device it wishes to transmit to directly. For example, both the first access point 12 and second access point 14 in Figure 1 could, by turns, have traffic for the client device 16, as would be the case when the first access point 12 and the second access point 14 are connected to two different sources of traffic such as a Broadband Gateway and Satellite Set-Top Box. The primary distinction of this embodiment is the very small time scale for which the floating link is used by each access point, which may be as short as a single WiFi packet. One of the most useful scenarios incorporating this embodiment is when multiple access points joined to each other by strong backbone connections maintain concurrent sessions to a relatively lower capacity client, such as a mobile tablet receiving Satellite video *and* supplementary information (such as subtitles or application data) from the Internet at the same time.

Figure 4 is an alternative embodiment of the invention described in respect to Figure 1. In addition to the components shown in Figure 1 and described above, there is shown a controller 13, having a processor 13a and a memory 13b. The controller 13 is connected to the first access point 12 via connection 13c. The connection 13c can be an ethernet connection, however, in further examples, the connection 13c is any type of connection that allows data to be passed between the controller 13 and the first access point 12. The controller 13 is connected to the first access point 12, however, in further examples, the controller 13 is connected to any number of access points or nodes in a network.

The memory 13b contains a pool of virtual addresses. When the first access point 12 connects with a client device 16 for the first time, a virtual address to identify the first access point 12 to the client device 16, is assigned by the controller 13 from the pool of virtual addresses contained in the memory 13b. The controller 13 records the assignment of a virtual address from the pool of virtual addresses in the memory 13b and prevents the virtual address from being assigned for use by any other access point in the network.

When the first access point 12 connects with a further client device (not shown), a different virtual address is assigned to the first access point 12, so that it can use the different virtual address to identify itself to the further client device. The different virtual address is assigned by the controller 13 to the first access point 12 from the remaining pool of virtual addresses in the memory 13b. The assignment of the different virtual address is recorded by the controller 13, which prevents the different virtual address from being assigned for use by any other access point in the network.

When the first access point 12 decouples with a client device, such as the client device 16 shown at Figure 4, the virtual address that was assigned to the first access point 12 to identify itself to the client device 16 is no longer required. Accordingly, the virtual address can be returned to the pool of available virtual addresses stored in the memory 13b. This is recorded and managed by the controller 13. Decoupling of a client device with an access point occurs when a message is received at the controller 13 that the access point no longer associates with the client device, when the client device has explicitly left. In further examples, decoupling of a client device with an access point occurs when the connection between the client device and the access point times out. This occurs when communication between the client device and access point has not occurred for a predetermined amount of time.

Similarly, when the second access point 14 decouples with a client device, such as the client device 16 shown at Figure 4, the virtual address that was assigned to the first access point 12 to identify itself to the client device 16 is no longer required. Accordingly, the virtual address can be returned to the pool of available virtual address stored in the memory 13b. This is recorded and managed by the controller 13. Hence, Figure 4 shows a centralised system for controlling the assignment and reuse of virtual addresses. This contrasts with the distributed architecture of Figure 1, where the assignment and reuse of virtual addresses is controlled at the individual access points.

In a handoff operation between the first access point 12 and the second access point 14, the virtual address that was sourced from the controller 13 is passed between the first access point 12 and the second access point 14. The event is transmitted throughout the network 10, so that other nodes are aware that the virtual address is in use and are aware which node is using the virtual address. This information is transmitted in particular to the controller 13, so that an updated table of available virtual addresses is maintained in its memory 13b.

The controller 13 is connected to the first access point 12. In an example, the controller 13 forms an integral part of the first access point 12, which is a master node. In further examples, the controller 13 is a separate, stand-alone device.

In an example, the controller 13 is responsible for determining route discovery for a client destination, as described with reference to Figure 3. The controller 13 determines that the first access point 12 is initially in communication with the client device 16, identifying itself to the client device 16 using a virtual address. The controller 13 uses a request/response mechanism to determine traffic through different pathways in a mesh network. A request, such as a Beacon Request Frame, is sent by the controller 13 to the client device 16 and to other nodes in the network, for example, the first and second access points 12, 14 of Figure 1.

The first and second access points 12, 14 also transmits requests to other nodes in the network. Each node in the network collects request frames and prepares and sends responses (such as Beacon Response Frames) to each of the request frames, containing information about the received request packets and corresponding data. This way, data, such as Received Signal Strength Indication (RSSI) values between different nodes are disseminated throughout the network, enabling determination of data throughputs in the network.
Once the controller 13 has received information from the route discovery process, the process moves to step S74, whereby potential mesh routes in a mesh network are evaluated at the processor 13a of the controller 13. The end-to-end throughput through alternative mesh routes in the network is evaluated. For example, with reference to Figure 1, the controller 13 determines traffic throughput to and from the client device 16 via each of the first access point 12 and the second access point 14.

The process then moves to step S76, where it is asked if the last hop formed by a floating link from the current access point is the best route that can be established. If it is (for example, if the connection between the first access point 12 and the client device 16 enables better data transfer than between the client device 16 and the second access point 14), then the process moves to step S78 and no action is taken. If it is not (for example, if the connection between the first access point 12 and the client device 16 enables less data transfer than between the client device 16 and the second access point 14), the process moves to step S80 and a handoff operation is performed to transfer information relating to the virtual address upon which the current floating link is based to the access point that does form the best last hop, i.e. from the first access point 12 to the second access point 14 in this example. The process S70 is initiated periodically. However, in further examples, the process S70 is initiated by other means, such as receipt at an access point of a packet with a MAC address that is not registered in a forwarding table of MAC addresses that is stored in the memory of the access point.

In a further example, the handoff operation at step S80 is performed in order to provide a station, such as a client device, with the strongest link to an access point in the network. One way this can be done is by determining at step S76 that the best route on the last hop is determined by the Received Signal Strength Indication (RSSI) at the other access points in the network. This is done by having each access point periodically broadcast a control packet to other associated mesh access points with a list of client devices it can hear and their RSSIs.

This RSSI estimation can be done by an AP to which the client is not currently associated by observing the RSSI of broadcast packets, such as Probe Requests or Clear-To-Send (CTS) messages. This distinction is important to offset the possibly misleading effects of access point-client specific measures, such as beamforming. The RSSI is used to estimate potential link capacity between the estimating AP and client. While raw RSSI can be used directly to estimate this capacity, other factors, such as channel width (20/40/80/160 MHz), noise level, number of available transmit and receive chains etc. can be used to form a more accurate estimate of potential link capacity.
There are shown a first and a second access point 12, 14 at Figure 1, however, in further examples, there may be any number of access points. Further, the decision to perform a handoff operation may be based on the end-to-end capacity of a connection including a wireless network device (such as an access point) and a client device versus the end-to-end capacity of a connection including a different wireless network device (such as a different access point) and the client device

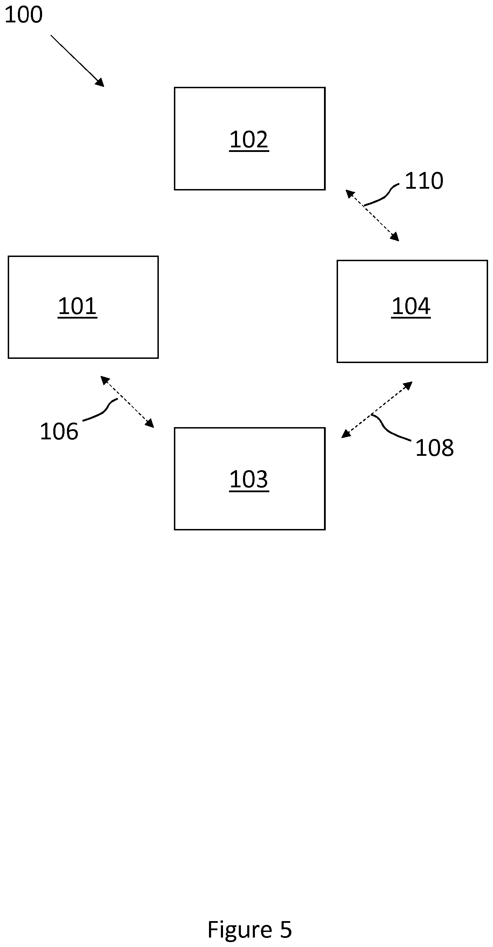

Figure 5 is an exemplary home network 100 comprising a residential gateway 101, satellite or DVB set-top box 102, access point 103 and a WiFi connected tablet 104. Each of the residential gateway 101, satellite or DVB set-top box 102 and access point 103 are also WiFi access points connected to each other via a mesh network. The WiFi connected tablet 104 can connect with any of the access points 101, 102, 103. Accordingly, as the WiFi tablet 104 is moved around the home network 100, the access point 101, 102, 103 with which it associates is chosen in accordance with the process described in relation to Figures 1 to 3 above. For example, the WiFi tablet 104 may initially communicate with the residential gateway 101 via the access point 103 and communication links 106, 108. However, upon determination that there is a superior pathway directly between the tablet 104 and the residential gateway 101, the vMAC address used by the access point 103 may be handed off to the residential gateway 101 so that it communicate using the vMAC to identify itself to the tablet 104, without the tablet 104 becoming aware that the access point has changed. Similarly, the WiFi tablet may be in communication with the satellite set top box 102, however, a superior pathway may exist between the access point 103 and the set top box 102, therefore the set top box 102 may pass its vMAC to the access point 103.

## Claims

1. A first wireless network device for use in a client device's floating link handoff from the first wireless network device to a further wireless network device, the first wireless network device configurable for communication with the client device and the further network device, the first wireless network device comprising:
a processor;
a network interface; and
a virtual address stored in a memory,
wherein the processor is configured to determine whether to operate the first wireless network device in a first state or a second state, wherein:
in the first state the first wireless network device communicates with the client device using the virtual address to identify itself to the client device; and
in the second state the first wireless network device sends a command containing information associated with the virtual address to the further network device via the network interface, wherein the command instructs the further network device to assume the virtual address and communicate with the client device instead of the first wireless network device after a predetermined time interval, wherein the first wireless network device determines to operate:
in the first state when an estimated capacity of a connection including the first wireless network device and the client device is the same or greater than an estimated capacity of a connection including the further network device and the client device; and
in the second state when the estimated capacity of the connection including the first wireless network device and the client device is less than the estimated capacity of the connection including the further network device and the client device; and
wherein the estimated capacity is a function of the best end-to-end link, wherein the best end-to-end link is determined as the end-to-end link which minimizes the airtime spent by the network in getting the traffic to the wireless network device, access point, which holds the floating link for the client device and by the client device for its uplink and downlink traffic.

2. The wireless network device according to claim 1, wherein the predetermined time interval is zero or wherein the predetermined time interval is the time taken for queued packets at the wireless network device directed to the client device to be depleted, preferably wherein the wireless network device is configured to transmit a notification to the further network device once the queued packets directed to the client device have been depleted.

3. The first wireless network device according to any preceding claim, wherein if the first wireless network device is configured in the first state, after a second predetermined time the first wireless network device transmits data indicating that it is configured in the first state to other network devices in a wireless network to which the wireless network device is connectable, thereby to inform other wireless network devices in a wireless network that it is in communication with the client device using the virtual address to identify itself to the client device

4. A further wireless network device for use in a client device's floating link handoff from a first network device to the further network device, the further wireless network device configurable for communication with the client device and the first wireless network device, the further s network device comprising:
a processor;
a network interface; and
a memory,
wherein the processor is configured to:
receive a command from the first network device through the network interface, wherein the command instructs the further wireless network device to assume a virtual address of the first network device and communicate with the client device instead of the first wireless network device after a predetermined time interval; store the virtual address in the memory; and
communicate with the client device using the virtual address to identify itself to the client device after the predetermined time interval, wherein the processor is further configured to determine whether to operate the further wireless network device in a first state or a second state, wherein:
in the first state the further wireless network device communicates with the client device using the virtual address to identify itself to the client device; and
in the second state the further wireless network device sends a command containing information associated with the virtual address to a first wireless network device via the network interface, wherein the command instructs the first wireless network device to assume the virtual address and communicate with the client device instead of the further wireless network device after a predetermined time interval, wherein the further wireless network device operates:
in the first state when an estimated capacity of a connection including the further wireless network device and the client device is the same or greater than an estimated capacity of a connection including the first wireless network device and the client device; and
in the second state when the estimated capacity of the connection including the further wireless network device and the client device is less than the estimated capacity of the connection including the first network device and the client device; and
wherein the estimated capacity is a function the best end-to-end link, wherein the best end-to-end link is determined as the end-to-end link which minimizes the airtime spent by the network in getting the traffic to the wireless network device, access point, which holds the floating link for the client device and by the client device for its uplink and downlink traffic.

5. The further wireless network device according to claim 4, wherein the predetermined interval is zero, or wherein the predetermined time interval is the time taken for queued packets at the first wireless network device directed to the client device to be depleted, wherein the further wireless network device is configured to receive notification from the first wireless network device that the queued packets at the first network device directed to the client device have been depleted, more, preferably wherein after a second predetermined time the further wireless network device transmits data indicating that it is configured to communicate with the client device using the virtual address to identify itself to the client device, preferably wherein the further wireless network device is configured to notify the first network device once it has transmitted data indicating that it is configured to communicate with the client device using the virtual address to identify itself to the client device.

6. The wireless network device according to any preceding claim, wherein the virtual address is a virtual media access control (vMAC) address.

7. The wireless network device according to any preceding claim, wherein the command contains an encryption cypher or the last known link adaptation state.

8. A method of communicating in a network, the method comprising the steps of:
determining at a processor of a first wireless network device configurable for communication with a client device and a further network device, whether to operate the first wireless network device, in a first state or a second state, wherein:
in the first state the first wireless network device communicates with the client device using a virtual address stored in the memory of the first network device to identify itself to the client device; and
in the second state the first wireless network device sends a command containing information associated with the virtual address stored in the memory of the first network device to the further wireless network device via a network interface, wherein the command instructs the further wireless network device to assume the virtual address and communicate with the client device instead of the first wireless network device after a predetermined time interval; and
operating in the first state or the second state, wherein the step of determining to operate in the first or the second state is based on:
determining an estimated capacity of a connection including the first wireless network device and the client device and an estimated capacity of a connection including the further network device and the client device and:
if the estimated capacity of the connection including the first wireless network device and the client device is the same or greater than an estimated capacity of the connection including the further network device and the client device, operating in the first state; and
if the estimated capacity of the connection including the first wireless network device and the client device is less than an estimated capacity of the connection including the further network device and the client device, operating in the second state; and
wherein the estimated capacity is a function the best end-to-end link, wherein the best end-to-end link is determined as the end-to-end link which minimizes the airtime spent by the network in getting the traffic to the wireless network device, access point, which holds the floating link for the client device and by the client device for its uplink and downlink traffic.

9. The method of communicating in a network according to claim 8, wherein the predetermined time interval is zero, or wherein the predetermined time interval is the time taken for queued packets at the first wireless network device directed to the client device to be depleted, preferably comprising the further step of transmitting a notification to the further network device once the queued packets directed to the client device have been depleted from the first wireless network device, more preferably comprising the further step of transmitting data indicating that the first wireless network device is configured in the first state to other network devices, in the wireless network to which the first wireless network device is connectable, after a second predetermined time, thereby to inform other wireless network devices in the wireless network that the first wireless network device is in communication with the client device using the virtual address to identify itself to the client device,

10. A method of communicating in a network, the method comprising the steps of:
receiving at a processor of a further wireless network device, configurable for communication with a client device and a first wireless network device, a command from the first network device, wherein the command instructs the further wireless network device to assume a virtual address of the first network device and communicate with the client device instead of the first network device after a predetermined time interval;
storing the virtual address in a memory of the further wireless network device; and
communicating via a network interface of the further wireless network device with the client device using the virtual address to identify the further wireless network further device to the client device after the predetermined time interval, comprising the further steps of determining whether to operate the further wireless network device, in use, in a first state or a second state, wherein:
in the first state the further wireless network device communicates with the client device using the virtual address to identify itself to the client device; and
in the second state the further wireless network device sends a command containing information associated with the virtual address to the first network device via the network interface, wherein the command instructs the first wireless network device to assume the virtual address and communicate with the client device instead of the further wireless network device after a predetermined time interval, wherein the further wireless network device operates:
in the first state when an estimated capacity of a connection including the further wireless network device and the client device is the same or greater than an estimated capacity of a connection including the first wireless network device and the client device; and
in the second state when the estimated capacity of the connection including the further wireless network device and the client device is less than the estimated capacity of the connection including the first wireless network device and the client device; and
wherein the estimated capacity is a function of the best end-to-end link, wherein the best end-to-end link is determined as the end-to-end link which minimizes the airtime spent by the network in getting the traffic to the wireless network device, access point, which holds the floating link for the client device and by the client device for its uplink and downlink traffic.

11. The method of communicating in a network according to claim 10, wherein the predetermined interval is zero, or wherein the predetermined time interval is the time taken for queued packets at the first wireless network device directed to the client device to be depleted, preferably further comprising the step of receiving a notification from the first wireless network device once the queued packets at the first wireless network device directed to the client device have been depleted, more preferably comprising the step of transmitting data indicating that the further s network device is configured to communicate with the client device using the virtual address to identify itself to the client device after a second predetermined time, preferably further comprising the step of notifying the first wireless network device once it has transmitted data indicating that it is configured to communicate with the client device using the virtual address to identify itself to the client device.

12. The method of communicating in a network according to any of claims 8 to 11, wherein the virtual address is a virtual media access control (vMAC) address.

13. The method of communicating in a network according to any of claims 8 to 12, wherein the command contains an encryption cypher or the last known link adaptation state.

14. A network device for use in a network, the network device configurable for communication with a first wireless network device and a client device, the network device comprising:
a processor;
a network interface; and
at least one virtual address stored in a memory, wherein the processor is configured to determine whether to operate the first wireless network device, in a first state or a second state, wherein:
in the first state the first wireless network device communicates with the client device using the at least one virtual address to identify itself to the client device; and
in the second state the first wireless network device sends a command containing information associated with the at least one virtual address to a further wireless network device, via the network interface, wherein the command instructs the further wireless network device to assume the at least one virtual address and communicate with the client device instead of the first wireless network device after a predetermined time interval, wherein the network device determines the first wireless network device to operate:
in the first state when an estimated capacity of a connection including the first wireless network device and the client device is the same or greater than an estimated capacity of a connection including the further wireless network and the client device; and
in the second state when the estimated capacity of the connection including the first wireless network device and the client device is less than the estimated capacity of the connection including the further wireless network and the client device; and
wherein the estimated capacity is a function of the best end-to-end link, wherein the best end-to-end link is determined as the link which minimizes the airtime spent by the network in getting the traffic to the wireless network device, access point, which holds the floating link for the client device and by the client device for its uplink and downlink traffic.

15. The network device according to claim 14, wherein the predetermined time interval is zero, or wherein the predetermined time interval is the time taken for queued packets at the first wireless network device of the plurality of wireless network devices directed to the client device to be depleted, preferably wherein the at least one virtual address is made unavailable for use by other wireless network devices when it is determined by the network device that the first wireless network device is in the first state, more preferably wherein the at least one virtual address is made available for use by other wireless network devices when it is determined by the network device that the first wireless network device is not in the first state.

## Patentansprüche

1. Ein erstes drahtloses Netzwerkgerät zur Verwendung bei Übergabe einer schwebenden Verbindung eines Client-Geräts von dem ersten drahtlosen Netzwerkgerät an ein weiteres drahtloses Netzwerkgerät, wobei das erste drahtlose Netzwerkgerät konfigurierbar ist für eine Kommunikation mit dem Client-Gerät und dem weiteren Netzwerkgerät, wobei das erste drahtlose Netzwerkgerät umfasst:
einen Prozessor;
eine Netzwerkschnittstelle; und
eine virtuelle Adresse, die in einem Speicher gespeichert ist,
wobei der Prozessor ausgebildet ist zum Bestimmen, ob das erste drahtlose Netzwerkgerät in einem ersten Zustand oder in einem zweiten Zustand zu betreiben ist, wobei:
das erste drahtlose Netzwerkgerät in dem ersten Zustand mit dem Client-Gerät kommuniziert und hierfür die virtuelle Adresse verwendet, um sich gegenüber dem Client-Gerät zu identifizieren; und
das erste drahtlose Netzwerkgerät in dem zweiten Zustand über die Netzwerkschnittstelle an das weitere Netzwerkgerät einen Befehl sendet, der mit der virtuellen Adresse verbundene Informationen enthält, wobei der Befehl das weitere Netzwerkgerät anweist, die virtuelle Adresse zu übernehmen und nach einem vorgegebenen Zeitintervall statt mit dem ersten drahtlosen Netzwerkgerät mit dem Client-Gerät zu kommunizieren, wobei das erste drahtlose Netzwerkgerät bestimmt:
in dem ersten Zustand zu arbeiten, wenn eine geschätzte Kapazität einer das drahtlose Netzwerkgerät und das Client-Gerät einschließenden Verbindung die gleiche ist wie oder größer ist als eine geschätzte Kapazität einer das weitere Netzwerkgerät und das Client-Gerät einschließenden Verbindung; und
in dem zweiten Zustand zu arbeiten, wenn die geschätzte Kapazität der das erste drahtlose Netzwerkgerät und das Client-Gerät einschließenden Verbindung geringer ist als die geschätzte Kapazität der das weitere Netzwerkgerät und das Client-Gerät einschließenden Verbindung; und
wobei die geschätzte Kapazität eine Funktion der besten Ende-zu-Ende-Verbindung ist, wobei die beste Ende-zu-Ende-Verbindung bestimmt ist als die Ende-zu-Ende-Verbindung, die die Airtime minimiert, die das Netzwerk benötigt, um den Datenverkehr zu dem drahtlosen Netzwerkgerät zu bringen, dem Zugangspunkt, , der die schwebende Verbindung für das Client-Gerät hält, und die das Client-Gerät für seinen Uplink- und Downlink-Verkehr benötigt.

2. Drahtloses Netzwerkgerät nach Anspruch 1, wobei das vorgegebene Zeitintervall Null beträgt oder wobei das vorgegebene Zeitintervall die Zeit ist, die benötigt wird, um an dem drahtlosen Netzwerkgerät anstehende Pakete, die an das Client-Gerät gerichtet sind, zu leeren, wobei das drahtlose Netzwerkgerät vorzugsweise derart konfiguriert ist, dass dieses eine Benachrichtigung an das weitere Netzwerkgerät übermittelt, sobald die an das Client-Gerät gerichteten anstehenden Pakete geleert wurden.

3. Das erste drahtlose Netzwerkgerät nach einem der vorhergehenden Ansprüche, wobei das drahtlose Netzwerkgerät, wenn dieses in dem ersten Zustand konfiguriert ist, nach einer zweiten vorgegebenen Zeit an andere Netzwerkgeräte in einem drahtlosen Netzwerk, mit welchem das drahtlose Netzwerkgerät verbindbar ist, Daten überträgt, die angeben, dass das drahtlose Netzwerkgerät in dem ersten Zustand konfiguriert ist, um dadurch anderen drahtlosen Netzwerkgeräten in einem drahtlosen Netzwerk mitzuteilen, dass es sich in Kommunikation mit dem Client-Gerät befindet unter Verwendung der virtuellen Adresse, um sich gegenüber dem Client-Gerät zu identifizieren.

4. Ein weiteres drahtloses Netzwerkgerät zur Verwendung bei Übergabe einer schwebenden Verbindung eines Client-Geräts von einem ersten Netzwerkgerät an das weitere Netzwerkgerät, wobei das weitere drahtlose Netzwerkgerät konfigurierbar ist für eine Kommunikation mit dem Client-Gerät und dem ersten drahtlosen Netzwerkgerät, wobei das weitere Netzwerkgerät umfasst:
einen Prozessor;
eine Netzwerkschnittstelle; und
einen Speicher,
wobei der Prozessor konfiguriert ist für:
den Empfang eines Befehls von dem ersten Netzwerkgerät über die Netzwerkschnittstelle, wobei der Befehl das weitere drahtlose Netzwerkgerät anweist, eine virtuelle Adresse des ersten Netzwerkgeräts zu übernehmen und nach einem vorgegebenen Zeitintervall statt mit dem ersten drahtlosen Netzwerkgerät mit dem Client-Gerät zu kommunizieren;
die Speicherung der virtuellen Adresse in dem Speicher; und
die Kommunikation mit dem Client-Gerät nach dem vorgegebenen Zeitintervall, unter Verwendung der virtuellen Adresse, um sich gegenüber dem Client-Gerät zu identifizieren,
wobei der Prozessor ferner ausgebildet ist zum Bestimmen, ob das weitere drahtlose Netzwerkgerät in einem ersten Zustand oder in einem zweiten Zustand betrieben werden soll, wobei:
das weitere drahtlose Netzwerkgerät in dem ersten Zustand mit dem Client-Gerät kommuniziert und dabei die virtuelle Adresse verwendet, um sich gegenüber dem Client-Gerät zu identifizieren; und
das weitere drahtlose Netzwerkgerät in dem zweiten Zustand über die Netzwerkschnittstelle an ein erstes drahtloses Netzwerkgerät einen Befehl sendet, der mit der virtuellen Adresse verbundene Informationen enthält, wobei der Befehl das erste drahtlose Netzwerkgerät anweist, die virtuelle Adresse zu übernehmen und nach einem vorgegebenen Zeitintervall statt mit dem weiteren drahtlosen Netzwerkgerät mit dem Client-Gerät zu kommunizieren, wobei das weitere drahtlose Netzwerkgerät:
in dem ersten Zustand arbeitet, wenn eine geschätzte Kapazität einer das weitere drahtlose Netzwerkgerät und das Client-Gerät einschließenden Verbindung die gleiche ist wie oder größer ist als eine geschätzte Kapazität einer das erste drahtlose Netzwerkgerät und das Client-Gerät einschließenden Verbindung; und
in dem zweiten Zustand arbeitet, wenn die geschätzte Kapazität der das weitere drahtlose Netzwerkgerät und das Client-Gerät einschließenden Verbindung geringer ist als die geschätzte Kapazität der das erste Netzwerkgerät und das Client-Gerät einschließenden Verbindung; und
wobei die geschätzte Kapazität eine Funktion der besten Ende-zu-Ende-Verbindung ist, wobei die beste Ende-zu-Ende-Verbindung bestimmt ist als die Ende-zu-Ende-Verbindung, die die Airtime minimiert, die das Netzwerk benötigt, um den Datenverkehr zu dem drahtlosen Netzwerkgerät zu bringen, dem Zugangspunkt, der die schwebende Verbindung für das Client-Gerät hält, und die das Client-Gerät für seinen Uplink- und Downlink-Verkehr benötigt.

5. Das weitere drahtlose Netzwerkgerät nach Anspruch 4, wobei das vorgegebene Zeitintervall Null beträgt oder wobei das vorgegebene Zeitintervall die Zeit ist, die benötigt wird, um an dem ersten drahtlosen Netzwerkgerät anstehende Pakete, die an das Client-Gerät gerichtet sind, zu leeren, wobei das weitere drahtlose Netzwerkgerät derart konfiguriert ist, dass dieses von dem ersten drahtlosen Netzwerkgerät eine Benachrichtigung empfängt, dass die an dem ersten Netzwerkgerät anstehenden, an das Client-Gerät gerichteten Pakete geleert wurden, wobei überdies bevorzugt das weitere drahtlose Netzwerkgerät nach einer zweiten vorgegebenen Zeit Daten überträgt, die angeben, dass es konfiguriert ist für die Kommunikation mit dem Client-Gerät unter Verwendung der virtuellen Adresse, um sich gegenüber dem Client-Gerät zu identifizieren, wobei bevorzugt das weitere drahtlose Netzwerkgerät konfiguriert ist, das erste Netzwerkgerät zu benachrichtigen, sobald es Daten gesendet hat, die angeben, dass es für die Kommunikation mit dem Client-Gerät unter Verwendung der virtuellen Adresse zur Identifizierung gegenüber dem Client-Gerät konfiguriert ist..

6. Drahtloses Netzwerkgerät nach einem der vorhergehenden Ansprüche, wobei die virtuelle Adresse eine virtuelle Media-Access-Control-Adresse (vMAC-Adresse) ist.

7. Drahtloses Netzwerkgerät nach einem der vorhergehenden Ansprüche, wobei der Befehl einen Verschlüsselungscode oder den zuletzt bekannten Verbindungsanpassungszustand enthält.

8. Verfahren zur Kommunikation in einem Netzwerk, wobei das Verfahren die Schritte umfasst:
das Bestimmen an einem Prozessor eines ersten drahtlosen Netzwerkgeräts, das für eine Kommunikation mit einem Client-Gerät und einem weiteren Netzwerkgerät konfigurierbar ist, ob das erste drahtlose Netzwerkgerät in einem ersten Zustand oder in einem zweiten Zustand zu betreiben ist, wobei:
das erste drahtlose Netzwerkgerät in dem ersten Zustand mit dem Client-Gerät kommuniziert und dabei eine virtuelle Adresse verwendet, die in dem Speicher des ersten Netzwerkgeräts gespeichert ist, um sich gegenüber dem Client-Gerät zu identifizieren; und
das erste drahtlose Netzwerkgerät in dem zweiten Zustand über eine Netzwerkschnittstelle an das weitere drahtlose Netzwerkgerät einen Befehl sendet, der Informationen in Verbindung mit der in dem Speicher des ersten Netzwerkgeräts gespeicherten virtuellen Adresse enthält, wobei der Befehl das weitere drahtlose Netzwerkgerät anweist, die virtuelle Adresse zu übernehmen und nach einem vorgegebenen Zeitintervall statt mit dem ersten drahtlosen Netzwerkgerät mit dem Client-Gerät zu kommunizieren; und den Betrieb in dem ersten Zustand oder in dem zweiten Zustand, wobei der Schritt des Bestimmens des Betriebs in dem ersten oder in dem zweiten Zustand basiert auf:
der Bestimmung einer geschätzten Kapazität einer das erste drahtlose Netzwerkgerät und das Client-Gerät einschließenden Verbindung und einer geschätzten Kapazität einer das weitere Netzwerkgerät und das Client-Gerät einschließenden Verbindung und:
wenn die geschätzte Kapazität der das erste drahtlose Netzwerkgerät und das Client-Gerät einschließenden Verbindung die gleiche ist wie oder größer ist als eine geschätzte Kapazität der das weitere Netzwerkgerät und das Client-Gerät einschließenden Verbindung, der Betrieb in dem ersten Zustand erfolgt; und
wenn die geschätzte Kapazität der das erste drahtlose Netzwerkgerät und das Client-Gerät einschließenden Verbindung geringer ist als die geschätzte Kapazität der das weitere Netzwerkgerät und das Client-Gerät einschließenden Verbindung, der Betrieb in dem zweiten Zustand erfolgt; und
wobei die geschätzte Kapazität eine Funktion der besten Ende-zu-Ende-Verbindung ist, wobei die beste Ende-zu-Ende-Verbindung bestimmt ist als die Ende-zu-Ende-Verbindung, die die Airtime minimiert, die das Netzwerk benötigt, um den Datenverkehr zu dem drahtlosen Netzwerkgerät zu bringen, dem Zugangspunkt, der die schwebende Verbindung für das Client-Gerät hält, und die das Client-Gerät für seinen Uplink- und Downlink-Verkehr benötigt.

9. Verfahren zur Kommunikation in einem Netzwerk nach Anspruch 8, wobei das vorgegebene Zeitintervall Null beträgt oder wobei das vorgegebene Zeitintervall die Zeit ist, die benötigt wird, um an dem ersten drahtlosen Netzwerkgerät anstehende Pakete, die an das Client-Gerät gerichtet sind, zu leeren,
wobei das Verfahren vorzugsweise den weiteren Schritt umfasst, dass eine Benachrichtigung an das weitere Netzwerkgerät übermittelt wird, sobald die an das Client-Gerät gerichteten anstehenden Pakete von dem ersten drahtlosen Netzwerkgerät geleert wurden,
wobei das Verfahren überdies bevorzugt den weiteren Schritt umfasst, dass die Daten, die angeben, dass das drahtlose Netzwerkgerät in dem ersten Zustand konfiguriert ist, nach einer zweiten vorgegebenen Zeit an andere Netzwerkgeräte in dem drahtlosen Netzwerk übertragen werden, mit welchem das erste drahtlose Netzwerkgerät verbindbar ist, um dadurch anderen drahtlosen Netzwerkgeräten in dem drahtlosen Netzwerk mitzuteilen, dass sich das erste drahtlose Netzwerkgerät in Kommunikation mit dem Client-Gerät befindet, unter Verwendung der virtuellen Adresse, um sich gegenüber dem Client-Gerät zu identifizieren.

10. Verfahren zur Kommunikation in einem Netzwerk, wobei das Verfahren die Schritte umfasst:
den Empfang eines Befehls von dem ersten Netzwerkgerät an einem Prozessor eines weiteren drahtlosen Netzwerkgeräts, das konfigurierbar ist für eine Kommunikation mit einem Client-Gerät und einem ersten drahtlosen Netzwerkgerät, wobei der Befehl das weitere drahtlose Netzwerkgerät anweist, eine virtuelle Adresse des ersten Netzwerkgeräts zu übernehmen und nach einem vorgegebenen Zeitintervall statt mit dem ersten Netzwerkgerät mit dem Client-Gerät zu kommunizieren;
das Speichern der virtuellen Adresse in einem Speicher des Weiteren drahtlosen Netzwerkgeräts; und
das Kommunizieren über eine Netzwerkschnittstelle des Weiteren drahtlosen Netzwerkgeräts mit dem Client-Gerät, unter Verwendung der virtuellen Adresse zur Identifizierung des Weiteren drahtlosen Netzwerkgeräts gegenüber dem Client-Gerät nach dem vorgegebenen Zeitintervall,
umfassend die weiteren Schritte des Bestimmens, ob das weitere drahtlose Netzwerkgerät, wenn es im Einsatz ist, in einem ersten Zustand oder in einem zweiten Zustand zu betreiben ist, wobei:
das weitere drahtlose Netzwerkgerät in dem ersten Zustand mit dem Client-Gerät kommuniziert unter Verwendung der virtuellen Adresse verwendet, um sich gegenüber dem Client-Gerät zu identifizieren; und
das weitere drahtlose Netzwerkgerät in dem zweiten Zustand über die Netzwerkschnittstelle an das erste Netzwerkgerät einen Befehl sendet, der mit der virtuellen Adresse verbundene Informationen enthält, wobei der Befehl das erste drahtlose Netzwerkgerät anweist, die virtuelle Adresse zu übernehmen und nach einem vorgegebenen Zeitintervall statt mit dem weiteren drahtlosen Netzwerkgerät mit dem Client-Gerät zu kommunizieren, wobei das weitere drahtlose Netzwerkgerät:
in dem ersten Zustand arbeitet, wenn eine geschätzte Kapazität einer das weitere drahtlose Netzwerkgerät und das Client-Gerät einschließenden Verbindung die gleiche ist wie oder größer ist als eine geschätzte Kapazität einer das erste Netzwerkgerät und das Client-Gerät einschließenden Verbindung; und
in dem zweiten Zustand arbeitet, wenn die geschätzte Kapazität der das weitere drahtlose Netzwerkgerät und das Client-Gerät einschließenden Verbindung geringer ist als die geschätzte Kapazität der das erste Netzwerkgerät und das Client-Gerät einschließenden Verbindung; und
wobei die geschätzte Kapazität eine Funktion der besten Ende-zu-Ende-Verbindung ist, wobei die beste Ende-zu-Ende-Verbindung bestimmt ist als die Ende-zu-Ende-Verbindung, die die Airtime minimiert, die das Netzwerk benötigt, um den Datenverkehr zu dem drahtlosen Netzwerkgerät zu bringen, dem Zugangspunkt, der die schwebende Verbindung für das Client-Gerät hält, und die das Client-Gerät für seinen Uplink- und Downlink-Verkehr benötigt.

11. Verfahren zur Kommunikation in einem Netzwerk nach Anspruch 10, wobei das vorgegebene Zeitintervall Null beträgt oder wobei das vorgegebene Zeitintervall die Zeit ist, die benötigt wird, um die an dem ersten drahtlosen Netzwerkgerät anstehenden Pakete, die an das Client-Gerät gerichtet sind, zu leeren, wobei das Verfahren ferner vorzugsweise den Schritt umfasst, dass von dem ersten drahtlosen Netzwerkgerät eine Benachrichtigung empfangen wird, sobald die an dem ersten drahtlosen Netzwerkgerät anstehenden, an das Client-Gerät gerichteten Pakete geleert wurden, wobei das Verfahren überdies bevorzugt den Schritt umfasst, dass nach einer zweiten vorgegebenen Zeit Daten übertragen werden, die angeben, dass das weitere Netzwerkgerät für eine Kommunikation mit dem Client-Gerät konfiguriert ist, unter Verwendung der virtuellen Adresse, um sich gegenüber dem Client-Gerät zu identifizieren, wobei das Verfahren vorzugsweise ferner den Schritt umfasst, dass das erste drahtlose Netzwerkgerät benachrichtigt wird, sobald es Daten übertragen hat, die angeben, dass es für die Kommunikation mit dem Client-Gerät konfiguriert ist unter Verwendung der virtuellen Adresse zur Identifizierung gegenüber dem Client-Gerät.

12. Verfahren zur Kommunikation in einem Netzwerk nach einem der Ansprüche 8 bis 11, wobei die virtuelle Adresse eine virtuelle Media-Access-Control-Adresse (vMAC-Adresse) ist.

13. Verfahren zur Kommunikation in einem Netzwerk nach einem der Ansprüche 8 bis 12, wobei der Befehl einen Verschlüsselungscode oder den zuletzt bekannten Verbindungsanpassungszustand enthält.

14. Netzwerkgerät zur Verwendung in einem Netzwerk, wobei das Netzwerkgerät konfigurierbar ist für eine Kommunikation mit einem ersten drahtlosen Netzwerkgerät und einem Client-Gerät, wobei das Netzwerk-Gerät umfasst:
einen Prozessor;
eine Netzwerkschnittstelle; und
mindestens eine virtuelle Adresse, die in einem Speicher gespeichert ist,
wobei der Prozessor ausgebildet ist zum Bestimmen, ob das erste drahtlose Netzwerkgerät in einem ersten Zustand oder in einem zweiten Zustand zu betreiben ist, wobei:
das erste drahtlose Netzwerkgerät in dem ersten Zustand mit dem Client-Gerät kommuniziert und dafür die mindestens eine virtuelle Adresse verwendet, um sich gegenüber dem Client-Gerät zu identifizieren; und
das erste drahtlose Netzwerkgerät in dem zweiten Zustand über die Netzwerkschnittstelle an ein weiteres drahtloses Netzwerkgerät einen Befehl sendet, der verbundene Informationen mit der mindestens einen virtuellen Adresse enthält, wobei der Befehl das weitere Netzwerkgerät anweist, die mindestens eine virtuelle Adresse zu übernehmen und nach einem vorgegebenen Zeitintervall statt mit dem ersten drahtlosen Netzwerkgerät mit dem Client-Gerät zu kommunizieren,
wobei des Netzwerkgerät bestimmt, dass das erste drahtlose Netzwerkgerät:
in dem ersten Zustand arbeitet, wenn eine geschätzte Kapazität einer das erste drahtlose Netzwerkgerät und das Client-Gerät einschließenden Verbindung die gleiche ist wie oder größer ist als eine geschätzte Kapazität einer das weitere drahtlose Netzwerkgerät und das Client-Geräte einschließenden Verbindung; und
in dem zweiten Zustand arbeitet, wenn die geschätzte Kapazität der das erste drahtlose Netzwerkgerät und das Client-Gerät einschließenden Verbindung geringer ist als die geschätzte Kapazität der das weitere drahtlose Netzwerkgerät und das Client-Gerät einschließenden Verbindung; und
wobei die geschätzte Kapazität eine Funktion der besten Ende-zu-Ende-Verbindung ist, wobei die beste Ende-zu-Ende-Verbindung bestimmt ist als die Ende-zu-Ende-Verbindung, die die Airtime minimiert, die das Netzwerk benötigt, um den Datenverkehr zu dem drahtlosen Netzwerkgerät zu bringen, dem Zugangspunkt, der die schwebende Verbindung für das Client-Gerät hält, und die das Client-Gerät für seinen Uplink- und Downlink-Verkehr benötigt.

15. Netzwerkgerät nach Anspruch 14, wobei das vorgegebene Zeitintervall Null beträgt oder wobei das vorgegebene Zeitintervall die Zeit ist, die benötigt wird, um an dem ersten drahtlosen Netzwerkgerät der Vielzahl von drahtlosen Netzwerkgeräten anstehende Pakete, die an das Client-Gerät gerichtet sind, zu leeren, wobei vorzugsweise die mindestens eine virtuelle Adresse nicht verfügbar gemacht wird für eine Verwendung durch andere drahtlose Netzwerkgeräte, wenn durch das Netzwerkgerät bestimmt ist, dass sich das erste drahtlose Netzwerkgerät in dem ersten Zustand befindet, wobei überdies bevorzugt die mindestens eine virtuelle Adresse verfügbar gemacht wird für eine Verwendung durch andere drahtlose Netzwerkgeräte, wenn durch das Netzwerkgerät bestimmt ist, dass sich das erste drahtlose Netzwerkgerät nicht in dem ersten Zustand befindet.

## Revendications

1. Premier dispositif de réseau sans fil pour utiliser une liaison flottante d'un dispositif client à partir du premier dispositif de réseau sans fil vers un autre dispositif de réseau sans fil,
- le premier dispositif de réseau sans fil étant configurable pour communiquer avec le dispositif client et avec l'autre dispositif de réseau,
- le premier dispositif de réseau sans fil comprenant :
un processeur,
une interface réseau, et
une adresse virtuelle enregistrée dans une mémoire,
dispositif selon lequel
le processeur est configuré pour déterminer s'il doit fonctionner dans le premier dispositif de réseau sans fil dans un premier ou un second état, à savoir :
* dans le premier état, le premier dispositif de réseau sans fil communique avec le dispositif client en utilisant l'adresse virtuelle pour s'identifier lui-même au dispositif client, et
* dans le second état, le premier dispositif de réseau sans fil envoie une commande contenant l'information associée à l'adresse virtuelle pour l'autre dispositif de réseau par l'interface de réseau,
** la commande demandant à l'autre dispositif de réseau de prendre l'adresse virtuelle et communiquer avec le dispositif client au lieu du premier dispositif de réseau sans fil après un intervalle de temps prédéterminé,
selon lequel
le premier dispositif de réseau sans fil détermine, pour fonctionner :
** dans le premier état, si la capacité estimée d'une connexion comprenant le premier dispositif de réseau sans fil et le dispositif client est le même ou est supérieur à une capacité estimée d'une connexion comprenant l'autre dispositif de réseau et le dispositif client, et
** dans un second état, si la capacité estimée de connexion comprenant le premier dispositif de réseau sans fil et le dispositif client est inférieure à la capacité estimée de la connexion comprenant l'autre dispositif de réseau et le dispositif client, et
* la capacité estimée est une fonction de la meilleure liaison bout à bout, cette meilleure liaison bout à bout étant déterminée comme la liaison bout à bout qui minimise le temps aérien passé par le réseau pour obtenir le trafic avec le dispositif de réseau sans fil, le point d'accès qui maintient la liaison flottante pour le dispositif client et par le dispositif client pour le trafic en liaison montante et en liaison descendante.

2. Dispositif de réseau sans fil selon la revendication 1,
selon lequel
l'intervalle de temps prédéterminé est nul ou l'intervalle de temps prédéterminé est le temps pris pour un paquet en file d'attente du dispositif de réseau sans fil dirigé vers le dispositif client pour être pris de préférence, le dispositif de réseau sans fil étant configuré pour transmettre une notification à l'autre dispositif de réseau dès que les paquets en file d'attente dirigés vers le dispositif client ont été pris.

3. Premier dispositif de réseau sans fil selon l'une quelconque des revendications précédentes,
selon lequel
si le premier dispositif de réseau sans fil est configuré dans le premier état, après un second temps prédéterminé, le premier dispositif de réseau sans fil transmet les données indiquant qu'il est configuré dans le premier état, vers les autres dispositifs de réseau dans un réseau sans fil auquel le dispositif de réseau sans fil peut être connecté, de façon à informer les autres dispositifs de réseau sans fil dans un réseau sans fil, qu'il est en communication avec le dispositif client utilisant l'adresse virtuelle pour s'identifier au dispositif client.

4. Autre dispositif de réseau sans fil destiné à être utilisé dans une prise en main en liaison flottante d'un dispositif client à partir d'un premier dispositif de réseau vers l'autre dispositif de réseau,
cet autre dispositif de réseau sans fil étant configurable pour communiquer avec le dispositif client et avec le premier dispositif de réseau sans fil,
cet autre dispositif de réseau comprenant :
un processeur,
une interface réseau, et
une mémoire,
le processeur étant configuré pour :
- recevoir une commande du premier dispositif de réseau par l'interface réseau,
* la commande demandant au dispositif de réseau sans fil de prendre l'adresse virtuelle du premier dispositif de réseau et de communiquer avec le dispositif client au lieu du premier dispositif de réseau sans fil après un intervalle de temps prédéterminé,
** enregistrer l'adresse virtuelle dans la mémoire, et
** communiquer avec le dispositif client en utilisant l'adresse virtuelle pour s'identifier lui-même au dispositif client après l'intervalle de temps prédéterminé,
** le processeur étant en outre configuré pour déterminer s'il doit activer l'autre dispositif de réseau sans fil dans un premier état ou dans un second état, et
** dans le premier état, l'autre dispositif de réseau sans fil communique avec le dispositif client en utilisant l'adresse virtuelle pour s'identifier au dispositif client et dans le second état, l'autre dispositif de réseau sans fil envoie une commande contenant l'information associée à l'adresse virtuelle au premier dispositif de réseau sans fil par l'interface réseau, selon lequel
la commande demande au premier dispositif de réseau sans fil de prendre l'adresse virtuelle et de communiquer avec le dispositif client au lieu de l'autre dispositif de réseau sans fil après un intervalle de temps prédéterminé,
l'autre dispositif de réseau sans fil fonctionnant :
dans le premier état, si une capacité estimée de connexion comprenant l'autre dispositif de réseau sans fil et le dispositif client, est égale ou supérieure à une capacité estimée de connexion comprenant le premier dispositif de réseau sans fil et le dispositif client, et
dans le second état, si la capacité estimée de connexion comprenant l'autre dispositif de réseau sans fil et le dispositif client est inférieure à la capacité estimée de connexion comprenant le premier dispositif réseau et le dispositif client, et
selon lequel
la capacité estimée est une fonction de la meilleure liaison bout à bout, cette meilleure liaison bout à bout étant déterminée comme liaison bout à bout qui minimise le temps aérien du réseau pour obtenir le trafic avec le dispositif de réseau sans fil, point d'accès, qui maintient le lien flottant pour le dispositif client et par le dispositif client pour son trafic montant et son trafic descendant.

5. Autre dispositif de réseau sans fil selon la revendication 4,
selon lequel
l'intervalle prédéterminé est nul, ou
l'intervalle prédéterminé est le temps pris pour des paquets en file d'attente du premier dispositif de réseau sans fil soient dirigés vers le dispositif client pour être épuisés, cet autre dispositif de réseau sans fil étant configuré pour recevoir une notification du premier dispositif de réseau sans fil indiquant que les paquets en file d'attente du premier dispositif de réseau sans fil, dirigés vers le client ont été épuisés et de manière plus préférentielle, après un second temps prédéterminé, l'autre dispositif de réseau sans fil transmet les données indiquant qu'il est configuré pour communiquer avec le dispositif client en utilisant l'adresse virtuelle pour s'identifier lui-même au dispositif client de préférence selon lequel l'autre dispositif de réseau sans fil est configuré pour notifier au premier dispositif de réseau sans fil qu'il a transmis les données indiquant qu'il est configuré pour communiquer avec le dispositif client en utilisant l'adresse virtuelle pour s'identifier lui-même au dispositif client.

6. Dispositif de réseau sans fil selon l'une quelconque des revendications précédentes,
selon lequel
l'adresse virtuelle est une adresse virtuelle de commande d'accès média (vMAC).

7. Dispositif de réseau sans fil selon l'une quelconque des revendications précédentes,
selon lequel
la commande contient un chiffre d'encryptage ou le dernier état connu d'adaptation de liaison.

8. Procédé de communication dans un réseau,
comprenant les étapes consistant à :
- déterminer dans un processeur du premier dispositif de réseau sans fil, configurable pour communiquer avec un dispositif client et un autre dispositif de réseau, s'il doit activer le premier dispositif de réseau sans fil dans un premier ou un second état :
- dans le premier état, le premier dispositif de réseau sans fil communique avec le dispositif client en utilisant une adresse virtuelle enregistrée dans la mémoire du premier dispositif réseau pour s'identifier lui-même au dispositif client, et
- dans le second état, le premier dispositif de réseau sans fil envoie une commande contenant l'information associée à l'adresse virtuelle enregistrée dans la mémoire du premier dispositif de réseau pour l'autre dispositif de réseau sans fil, par une interface de réseau,
* la commande demandant à l'autre dispositif de réseau sans fil de,
** prendre l'adresse virtuelle et communiquer avec le dispositif client au lieu du premier dispositif de réseau sans fil après un intervalle de temps prédéterminé, et
**faire fonctionner dans le premier état ou dans le second état, l'étape consistant à déterminer pour fonctionner dans le premier état ou dans le second état en fonction de ce que :
- on détermine la capacité estimée d'une connexion comprenant le premier dispositif de réseau sans fil et le dispositif client et une capacité estimée d'une connexion comprenant l'autre dispositif de réseau et le dispositif client et :
** si la capacité estimée de connexion comprenant le premier dispositif de réseau sans fil et le dispositif client est égale ou supérieure à la capacité estimée de connexion comprenant l'autre dispositif de réseau et le dispositif de client, faire fonctionner dans le premier état, et
** si la capacité estimée de connexion comprenant le premier dispositif de réseau sans fil et le dispositif client est inférieure à une capacitée estimée de connexion comprenant l'autre dispositif de réseau et le dispositif client, faire fonctionner dans le second état, et
dans lequel
* la capacité estimée est une fonction de la meilleure liaison de bout à bout, cette meilleure liaison bout à bout se déterminant comme liaison bout à bout qui minimise le temps aérien passé par le réseau pour obtenir le trafic avec le dispositif de réseau sans fil, point d'accès, qui maintient la liaison flottante pour le dispositif client et par le dispositif client pour le trafic montant et le trafic descendant.

9. Procédé de communication dans un réseau selon la revendication 8, selon lequel
l'intervalle de temps prédéterminé est nul, ou
l'intervalle de temps prédéterminé est le temps pris pour les paquets en file d'attente du premier dispositif de réseau sans fil, dirigés vers le dispositif client pour être repris, comprenant de préférence l'étape suivante consistant à transmettre une notification vers l'autre dispositif de réseau dès que les paquets en file d'attente dirigés vers le dispositif client, ont été pris par le premier dispositif de réseau sans fil, de façon plus préférentielle, comprenant l'autre étape consistant à transmettre des données indiquant que le premier dispositif de réseau sans fil est configuré dans le premier état, vers d'autres dispositifs de réseau dans le réseau sans fil vers lequel le premier dispositif de réseau sans fil peut être connecté, après une seconde durée prédéterminée, de façon à informer les autres dispositifs de réseau sans fil, du réseau sans fil que le premier dispositif de réseau sans fil communique avec le dispositif client en utilisant l'adresse virtuelle pour s'identifier lui-même au dispositif client.

10. Procédé de communication dans un réseau,
le procédé comprenant les étapes consistant à :
- recevoir dans un processeur d'un autre dispositif de réseau sans fil configurable pour communiquer avec un dispositif client et avec un premier dispositif de réseau sans fil, une commande du premier dispositif de réseau,
* cette commande demandant à l'autre dispositif de réseau sans fil de prendre une adresse virtuelle du premier dispositif de réseau et de communiquer avec le dispositif client au lieu du premier dispositif de réseau après un intervalle de temps prédéterminé,
- enregistrer l'adresse virtuelle dans une mémoire de l'autre dispositif de réseau sans fil, et
- communiquer par une interface réseau de l'autre dispositif de réseau sans fil avec le dispositif client en utilisant l'adresse virtuelle pour identifier l'autre dispositif de l'autre réseau sans fil, au dispositif client après l'intervalle de temps prédéterminé comprenant les étapes consistant à :
* déterminer s'il faut faire fonctionner l'autre dispositif de réseau sans fil dans un premier ou dans un second état :
** dans le premier état, l'autre dispositif de réseau sans fil communique avec le dispositif client en utilisant l'adresse virtuelle pour s'identifier lui-même au dispositif client, et
** dans le second état, l'autre dispositif de réseau sans fil envoie une commande contenant l'information associée à l'adresse virtuelle pour le premier dispositif de réseau par l'interface de réseau, cette commande demandant au premier dispositif de réseau sans fil de prendre l'adresse virtuelle et de communiquer avec le dispositif client au lieu de l'autre dispositif de réseau sans fil après un intervalle de temps prédéterminé, cet autre dispositif de réseau sans fil fonctionnant :
* dans le premier état, si la capacité estimée de connexion comprenant l'autre dispositif de réseau sans fil et le dispositif client, est égale ou supérieure à la capacité estimée de connexion comprenant le premier dispositif de réseau sans fil et le dispositif client, et
* dans le second état, si la capacité estimée de connexion comprenant l'autre dispositif de réseau sans fil et le dispositif client est inférieure à la capacité estimée de connexion comprenant le premier dispositif de réseau sans fil et le dispositif client, et
** la capacité estimée est une fonction de la meilleure liaison bout à bout, cette meilleure liaison bout à bout se déterminant comme la liaison bout à bout qui minimise le temps aérien passé par le réseau pour obtenir le trafic avec le dispositif de réseau sans fil, point d'accès qui maintient la liaison flottante pour le dispositif client et par le dispositif client pour le trafic montant et le trafic descendant.

11. Procédé de communication dans un réseau selon la revendication 10,
selon lequel
l'intervalle prédéterminé est nul, ou
l'intervalle de temps prédéterminé et le temps pris par des paquets en file d'attente du premier dispositif de réseau sans fil de se diriger vers le dispositif client pour être pris, comprenant de préférence l'étape consistant à :
recevoir une notification du premier dispositif de réseau sans fil dès que les paquets en file d'attente dirigés par le premier dispositif de réseau sans fil vers le dispositif client ont été pris et de manière plus préférentielle, comprenant l'étape consistant à transmettre les données indiquant que l'autre dispositif de réseau sans fil est configuré pour communiquer avec le dispositif client en utilisant l'adresse virtuelle pour s'identifier lui-même au dispositif client après un second temps prédéterminé, de préférence, comprenant l'étape consistant à notifier au premier dispositif de réseau sans fil dès qu'il a transmis les données indiquant qu'il est configuré pour communiquer avec le dispositif client en utilisant l'adresse virtuelle pour s'identifier lui-même au dispositif client.

12. Procédé de communication dans un réseau selon l'une quelconque des revendications 8 à 11,
selon lequel
l'adresse virtuelle est une adresse virtuelle de commande d'accès média (vMAC).

13. Procédé de communication dans un réseau selon l'une quelconque des revendications 8 à 12,
selon lequel
la commande contient un chiffre encrypté ou le dernier état connu d'adaptation de liaison.

14. Dispositif de réseau pour être utilisé dans un réseau, le dispositif de réseau pouvant être configuré pour communiquer avec un premier dispositif de réseau sans fil et avec un dispositif client,
le dispositif de réseau comprenant :
- un processeur,
- une interface de réseau, et
- au moins une adresse virtuelle enregistrée dans une mémoire,
* le processeur étant configuré pour déterminer s'il doit faire fonctionner le premier dispositif de réseau sans fil dans un premier état ou dans un second état, selon lequel :
** dans le premier état, le premier dispositif de réseau sans fil communique avec le dispositif client en utilisant au moins une adresse virtuelle pour s'identifier lui-même au dispositif client, et
** dans un second état, le premier dispositif de réseau sans fil envoie une commande contenant l'information associée à au moins une adresse virtuelle pour un autre dispositif de réseau sans fil par l'interface réseau, la commande demandant à l'autre dispositif de réseau sans fil de prendre au moins une adresse virtuelle et de communiquer avec le dispositif client au lieu du premier dispositif de réseau sans fil après un intervalle de temps prédéterminé,
- le dispositif de réseau déterminant le premier dispositif de réseau sans fil pour fonctionner :
* dans le premier état si la capacité estimée de connexion comprenant le premier dispositif de réseau sans fil et le dispositif client est la même ou est supérieure à une capacité estimée de connexion comprenant l'autre réseau sans fil et le dispositif client, et
* dans le second état si la capacité estimée de connexion comprenant le premier dispositif de réseau sans fil et le dispositif client est inférieure à la capacité estimée de connexion comprenant l'autre dispositif de réseau sans fil et le dispositif client, et
- la capacité estimée est une fonction de la meilleure liaison bout à bout, cette meilleure liaison bout à bout se déterminant comme liaison qui minimise le temps aérien passé par le réseau pour obtenir le trafic vers le dispositif de réseau sans fil, point d'accès, qui maintient la liaison flottante pour le dispositif client et par le dispositif client pour son trafic montant et son trafic descendant.

15. Dispositif de réseau selon la revendication 14,
selon lequel
l'intervalle de temps prédéterminé est nul ou l'intervalle de temps prédéterminé et le temps pris par des paquets en fil dans le premier dispositif de réseau sans fil d'un ensemble de dispositifs de réseau sans fil dirigés vers le dispositif client, pour être pris de préférence selon lequel au moins l'adresse virtuelle est rendue indisponible pour être utilisée par d'autres dispositifs de réseau sans fil s'il est déterminé par le dispositif de réseau que le premier dispositif de réseau sans fil est dans le premier état et de façon plus préférentielle, au moins cette adresse virtuelle est rendue disponible pour être utilisée par d'autres dispositifs de réseau sans fil si le dispositif de réseau a déterminé que le premier dispositif de réseau sans fil n'est pas dans le premier état.
